# EUROPÄISCHE PATENTSCHRIFT

(11) **EP 1 283 636 B1**
(45) Veröffentlichungstag und Bekanntmachung des Hinweises auf die Patenterteilung: **15.12.2010**
(21) Anmeldenummer: 01125790.4
(22) Anmeldetag: 29.10.2001
(51) Int. Cl.: H04M 3/42, H04W 4/12, H04L 12/58, H04M 15/00

(54) **Multimedialer Nachrichtendienst mit dienstanbieterübergreifender Antwortvergebührungs-Funktionalität**
Multimedia Messaging with reply-charging between different service environments
Messagerie multimédia avec facturation de réponse entre des fournisseurs de service differents

(30) Priorität: 10.08.2001 EP 01119364
(43) Veröffentlichungstag der Anmeldung: 12.02.2003
(60) Teilanmeldung: 10008437.5
(73) Patentinhaber: SIEMENS AKTIENGESELLSCHAFT, 80333 München (DE)
(72) Erfinder: Laumen, Josef, 31141 Hildesheim (DE); Schmidt, Andreas, 38114 Braunschweig (DE); Trauberg, Markus, Dr., 38159 Velchede (DE); Van Niekerk, Sabine, 38228 Salzgitter (DE)

(56) Entgegenhaltungen:
- EP-A- 0 833 490
- EP-A- 0 841 796
- WO-A-00/62573
- WO-A-01/37537

## Beschreibung

Die Erfindung betrifft Verfahren zur Informationsflußerweiterung bei der Übertragung einer Nachricht, insbesondere einer Multimedia-Nachricht, über ein Mobilfunknetz, insbesondere UMTS-Netz, entsprechende Vorrichtungen und entsprechende Softwareprogramme.

Das Mobilfunksystem GSM (GSM - Global System for Mobile Communications) bietet neben der Sprachtelefonie auch die Möglichkeit, kurze Textnachrichten von bis zu 160 Zeichen Länge zu versenden bzw. zu empfangen. Dieser Dienst heißt SMS (SMS - Short Message Service). Genaueres findet sich in der GSM 03.40 version 7.4.0, Release 1998; Digital Cellular Telecommunications System; Technical realisation of the Short Message Service (SMS).

Für das Mobilfunksystem der nächsten Generation UMTS (UMTS - Universal Mobile Telecommunications System) wird zur Zeit eine multimediafähige Variante eines mobilen Nachrichtendienstes standardisiert, der sogenannte MMS (MMS - Multimedia Messaging Service), s. 3GPP TS 22.140 version 4.1.0, Release 4; Third Generation Partnership Project; Technical Specification Group Services and System Aspects; Service Aspects; Stage 1; Multimedia Messaging Service (MMS), sowie 3GPP TS 23.140 version 4.3.0, Release 4; Third Generation Partnership Project; Technical Specification Group Terminals; Multimedia Messaging Service (MMS); Functional Description; Stage 2.

Nachrichten mit multimedialen Inhalten werden im Folgenden zur besseren Abgrenzung von den Textnachrichten des SMS nur noch kurz MMs (MM - Multimedia Message; das Endungs-s steht für den Plural) genannt. Im Gegensatz zum SMS entfällt die Beschränkung auf reine Textinhalte. Beim MMS wird es möglich sein, Texte dem individuellen Geschmack entsprechend zu formatieren, sowie Audio- und Videoinhalte in eine Nachricht einzubetten.

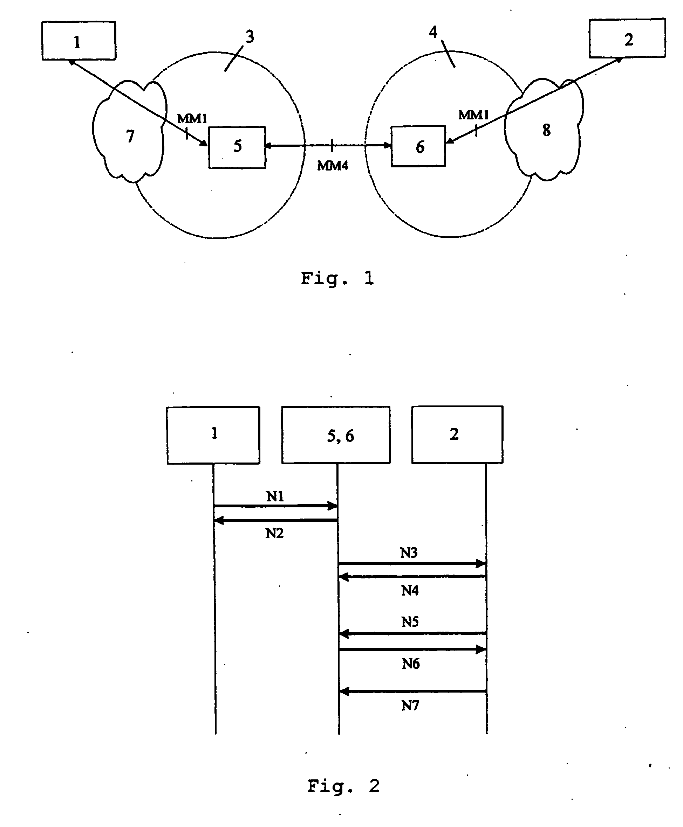

In Fig. 1 ist die MMS Netzwerk-Architektur nach heutigem Stand der Technik aus Sicht von 3GPP (Third Generation Partnership Project) dargestellt. Unter einem MMS User Agent (abgekürzt: UA; Mehrzahl: UAs) versteht man eine Applikation beispielsweise auf einem Mobilfunktelefon oder auf einem an ein Mobilfunktelefon angeschlossenen Gerät (z.B. Laptop, o.ä.), die MMS realisiert. Die Applikation, von der eine Nachricht ausgesendet wird, wird im Folgenden als Sendeapplikation bezeichnet, im speziellen MMS Agent A (hier abgekürzt mit UAA), die empfangende Applikation als Empfangsapplikation, im speziellen MMS User Agent B (hier abgekürzt mit UAB). Gemäß der Fig. 1 wird von einer Sendeapplikation UAA 1 über ein Funknetzwerk 7 unter Ausnutzung einer mit MM1 bezeichneten Luftschnittstelle eine MM zur mit MMS Relay/Server A (hier abgekürzt mit RSA; im weiteren wird MMS Relay/Server mit RS abgekürzt, Plural: RSs) bezeichneten Netzwerkeinheit 5 geschickt, der den UAs im Zuständigkeitsbereich eines MMS Dienstanbieters 3 (MMS Service Provider), dem sogenannten MMSE (MMSE - Multimedia Messaging Service Environment), die MMS-Funktionalität zur Verfügung stellt. Über eine Schnittstelle MM4 wird dann die Nachricht an eine mit MMS Relay/Server B (abgekürzt RSB) bezeichnete Netzwerkeinheit 6 im Zuständigkeitsbereich eines empfangsseitigen MMS Dienstanbieters 4 (MMS Service Providers B) weiterübermittelt, der wiederum über ein Funknetzwerk 8 unter Verwendung einer Schnittstelle MM1 die Nachricht an die Empfangsapplikation UAB 2 übermittelt.

In der Fig. 1 ist der allgemeine Fall dargestellt, daß die sendeseitige Netzwerkeinheit RSA 1 und die empfangsseitige Netzwerkeinheit RSB 2 nicht identisch sind. Der spezielle Fall nur eines involvierten MMSE ist jedoch auch im Stand der Technik bekannt, ebenso wie die Tatsache, daß die Schnittstelle MM1 nicht zwangsläufig als Luftschnittstelle ausgebildet zu sein braucht.

Ein in der obigen Spezifikation 3GPP TS 23.140 version 4.3.0, Release 4, beschriebenes Merkmal des MMS für den erwähnten speziellen Fall der Identität von sende- und empfangsseitigem RSs ist die sogenannte Antwortvergebührung, die i.a. mit Reply-Charging bezeichnet wird und gemäß welcher ein Absender beim Abschicken einer MM seine Bereitschaft äußern kann, die Kosten für eine Antwort-Nachricht, insbesondere eine Multimedia-Antwort (Antwort-MM), vom Empfänger zu übernehmen. Dabei kann zusätzlich auch eine Frist vom Absender angegeben werden. Liegt eine MM mit entsprechender Antwortvergebührung-Kennzeichnung auf dem Netzwerkelement RS für den Empfänger zum Herunterladen bereit, so wird dieser zunächst benachrichtigt und kann daraufhin die MM auf sein Endgerät herunterladen. Hierbei wird er sowohl in der Benachrichtigung als auch beim Herunterladen der MM darüber informiert, daß eine Antwort-Nachricht auf diese sogenannte Original-MM für ihn kostenfrei ist. Möchte er davon Gebrauch machen, muß er lediglich eine auf seinem Endgerät zusammengestellte MM als Antwort-MM auf die zuvor empfangene Original-MM kennzeichnen und abschicken. Die Antwortvergebührung-Funktionalität ist bisher nur innerhalb eines MMSEs definiert. Eine ausführliche Beschreibung findet sich in Anhang E von 3GPP TS 23.140 version 4.3.0, Release 4.

Alle für den Transport einer MM benötigten Informationen werden ebenso wie die ergänzenden Informationen für die Antwortvergebührung-Funktionalität als Informationselemente, sog. Information Elements, in die in 3GPP TS 23.140 version 4.3.0, Release 4 definierten Abstrakten Nachrichten, die sog. abstract messages, eingetragen. Erkennt ein am Datenaustausch beteiligtes Gerät (Applikation UA oder Netzwerkelement RS) ein Informationselement nicht, so wird dieses unverändert durchgereicht. Dieses Verhalten kann für die Antwortvergebührung-Funktionalität problematisch sein, denn die oben beschriebene Antwortvergebührung-Funktionalität nach Stand der Technik funktioniert nur dann, wenn alle am Datenaustausch beteiligten Geräte (also beide UAs und der RS) die Antwortvergebührung-Funktionalität unterstützen. Wenn beispielsweise nur die Sendeapplikation UAA und die Empfangsapplikation UAB die Antwortvergebührung-Funktionalität unterstützen und das beteiligte Netzwerklement RS nicht (weil er vielleicht eine veraltete MMS-Version unterstützt), kann eine Antwort-MM vom Netzwerkelement RS nicht erkannt und gegebenenfalls auch nicht abgewiesen werden, d.h. der Absender der Antwort-MM (= Empfänger der Original-MM) wird irrtümlich in dem Glauben gelassen, daß die Kosten der von ihm verschickten Antwort-MM vom Empfänger (= Absender der Original-MM) übernommen werden.

In den Standardisierungsgremien 3GPP und WAP Forum ist weder eine Lösung für das oben beschriebene Kompatibilitätsproblem (Netzwerkelement RS unterstützt Antwortvergebührung-Funktionalität nicht), noch für das Ausweiten der Antwortvergebührung-Funktionalität auf mehrere MMSEs bekannt.

Das beschriebene Problem ist auch für andere, ähnlich gelagerte Fälle vorhanden, bei denen ein Absender eine besondere Funktionalität von einem Dienstanbieter anfordert, ohne das der Sender und/oder der Empfänger weiß, ob die entsprechend beteiligten Netzwerkeinheiten im Zuständigkeitsbereich eines oder mehrerer Dienstanbieter die angeforderte Funktionalität unterstützen. Beispielsweise ist angedacht, in Zukunft weitere neue Funktionen, wie zum Beispiel "Rückruf von MMS", im MMS einzuführen, die zwar von den Sende- und Empfangseinheiten, aber evtl. nicht von beteiligten Netzwerkeinheiten unterstützt werden.

Ein weiteres Problem im Stand der Technik besteht darin, daß sich der Absender einer Original-Nachricht mit einem Antwortvergebührung-Hinweis nicht davor schützen kann, daß der Empfänger eine überlange und damit sehr teure Antwort-Nachricht an ihn zurückschickt.

Es ist Aufgabe der vorliegenden Erfindung, die Übertragung von Informationen beim Versand/Empfang einer Nachricht, die eine Anforderung einer bestimmten Funktionalität einer beteiligten Netzwerkeinheit im Zuständigkeitsbereich eines Dienstanbieters enthält, bedienerfreundlicher zu gestalten.

Diese Aufgabe wird hinsichtlich des Verfahrens gelöst durch die Merkmale des unabhängigen Anspruchs 1. Bezüglich der Vorrichtungen wird die Aufgabe gelöst durch die Merkmale der unabhängigen Ansprüche 13 und 15. Hinsichtlich der Softwareprogramme wird die Aufgabe gelöst durch die Merkmale der unabhängigen Ansprüche 17 und 18.

Das im Stand der Technik auftretende Kompatibilitätsproblem wird erfindungsgemäß gelöst, indem die Information zur Unterstützung der angeforderten Antwortvergebührung-Funktionalität der sende- und/oder empfangsseitigen Netzwerkeinheit zwischen den am Datenaustausch beteiligten Geräten übermittelt wird. In einem ersten Fall sind hierbei sende- und empfangsseitige Netzwerkeinheit, insbesondere also das betreffende Netzwerkelement RS im Zuständigkeitsbereich eines MMS Dienstanbieters, identisch. Die Information, welche die Rückmeldung von der betreffenden Netzwerkeinheit betrifft, wird erfindungsgemäß insbesondere an die Empfangsapplikation übermittelt. Ebenfalls ist eine entsprechende Bestätigung an die Sendeapplikation Teil der Erfindung. Der Empfang dieser Informationen auf Seiten der Sende- und/oder Empfangsapplikation ist ebenfalls Erfindungsbestandteil.

Ferner ermöglicht die Erfindung die Ausdehnung der angeforderten Funktionalität, also beispielsweise der Antwortvergebührung-Funktionalität oder die Nachrichtenrückruf-Funktionalität bei Rückrufanforderung durch den Absender, auch auf Sende- und Empfangsapplikationen, die den MMS von unterschiedlichen MMS Dienstanbietern in Anspruch nehmen (also zwischen zwei MMSEs). Durch die Übermittlung zusätzlicher Daten - nämlich der Information, daß bzw. ob ein Netzwerkelement RS die angeforderte Funktionalität unterstützt - beim Transport einer MM auf den beiden Teilstrecken vom sendeseitigen Netzwerkelement RS (MMS Relay/Server des Absenders) zum empfangsseitigen Netzwerkelement RS (MMS Relay/Server des Empfängers) bzw. vom empfangsseitigen Netzwerkelement RS zur Empfangsapplikation UAB wird die angeforderte Funktionalität auch zwischen verschiedenen MMSEs ermöglicht und das oben beschriebene Kompatibilitätsproblem gelöst.

Durch die Übermittlung der Information, ob ein Netzwerkelement RS die angeforderte Funktionalität als direkte Reaktion auf das Absenden einer MM auf der Teilstrecke vom Netzwerkelement RS zur Empfangsapplikation UAB unterstützt, kann demnach der Komfort der betreffenden Funktionalität deutlich erhöht werden.

Teil der Erfindung sind neben den Verfahren auch die entsprechenden beteiligten Vorrichtungen, also die Netzwerkeinheiten mit den entsprechenden Steuereinheiten sowie die Mobilfunkteilnehmergeräte, die mit den entsprechenden Empfangs- und/oder Sendeapplikationen ausgestattet sind. Hierbei ist es - wie oben schon ausgeführt - unerheblich, ob diese Applikationen direkt auf einem Mobilfunktelefon oder einem Laptop, Notebook o.ä. installiert sind. Der Begriff "Mobilfunkteilnehmergerät" umfaßt auch diese Ausführungsformen. Zudem sind auch die entsprechenden Softwareprogramme Teil der Erfindung.

Vorteilhafte Weiterbildungen der Erfindung sind in den Unteransprüchen angegeben.

Im Folgenden wird die Erfindung anhand der Figuren näher erläutert. Es zeigen:
Fig. 1 die MMS Netzwerk-Architektur nach den Spezifikationen des 3GPP;
Fig. 2 das Transaktionsflußdiagramm für den Fall des Versendens einer MM von einer Sendeapplikation (UAA) an eine Empfangsapplikation (UAB) unter Beteiligung nur eines Netzwerkelements RS;
Fig. 3 das Transaktionsflußdiagramm für den Fall des Versendens einer MM von einer Sendeapplikation (UAA) an eine Empfangsapplikation (UAB) unter Beteiligung zweier Netzwerkelemente (RSs), und
Fig. 4 das Transaktionsflußdiagramm im WAP für den Fall des Versendens einer MM von einer Sendeapplikation (CA) an eine Empfangsapplikation (CB) unter Beteiligung zweier Netzwerkelemente (PRs).

Im Folgenden wird beispielhaft anhand der speziellen Funktionalität "Antwortvergebührung" bzw. "Reply-Charging" beschrieben, wie durch den Austausch zusätzlicher Informationen auf der Schnittstelle MM1 das oben angesprochene Kompatibilitätsproblem innerhalb eines MMSEs beseitigt werden kann (Fall 1). Anschließend wird eine Erweiterung des vorgestellten Verfahrens auf den allgemeinen Fall vorgestellt, bei dem MMs zwischen zwei verschiedenen MMSEs unterschiedlicher MMS Dienstanbieter ausgetauscht werden (Fall 2). Von Veränderungen ist hierbei neben der Schnittstelle MM1 auch die Schnittstelle MM4 betroffen. Abschließend wird eine mögliche Realisierung des im allgemeinen Fall 2 beschriebenen Verfahrens (Austausch von MMs zwischen zwei MMSEs) für die als Luftschnittstelle ausgebildete Schnittstelle MM1 in WAP (WAP - Wireless Application Protocol) vorgestellt.

### I. Fall 1: Antwortvergebührung innerhalb eines einzigen MMSE

Zunächst wird anhand der Fig. 2 der Fall betrachtet, daß sowohl die Sendeapplikation UAA 1 (MMS User Agent A) als auch die Empfangsapplikation UAB 2 (MMS User Agent B), den MMS vom gleichen MMS Dienstanbieter in Anspruch nehmen, d.h. die MM wird nur innerhalb eines MMSE transportiert. Fig. 2 zeigt das dazugehörige sogenannte Transaktionsflußddiagramm nach 3GPP, in dem die in 3GPP TS 23.140 version 4.3.0, Release 4 definierten Abstrakten Nachrichten dargestellt sind. Benutzer A erstellt eine MM, kennzeichnet diese mit "Reply-Charging" und verschickt sie mittels der Abstrakten Nachricht N1 (*MM1_submit.REQ*) über die Schnittstelle MM1 an das Netzwerkelement RS im MMSE seines MMS Dienstanbieters. Dieser RS ist gleichzeitig sende- wie empfangsseitiges Netzwerkelement und ist daher mit den beiden Bezugszeichen 5 und 6 gekennzeichnet (vgl. Fig. 1). Das Netzwerkelement RS 5, 6 bestätigt den korrekten Empfang der MM von der Sendeapplikation UAA 1 mit der Abstrakten Nachricht N2 (*MM1_submik.RES*) und benachrichtigt den Empfänger B über die zum Herunterladen bereitliegende MM mit der Abstrakten Nachricht N3 (*MM1_notification.REQ*). Die Abstrakte Nachricht N4 (*MM1_notification.RES*) dient lediglich als Bestätigung für den korrekten Empfang der Benachrichtigung durch die Empfangsapplikation UAB 2. Mit der Abstrakten Nachricht N5 (*MM1_retrieve.REQ*) kann Benutzer B das Herunterladen einer auf dem Netzwerkelement RS 5, 6 bereitliegenden MM initiieren. Das Zustellen der MM vom Netzwerkelement RS 5, 6 an die Empfangsapplikation UAB 2 erfolgt mittels der Abstrakten Nachricht N6 (*MM1_retrieve.RES*). Die Bestätigung hierfür erfolgt anschließend mittels der Abstrakten Nachricht N7 (MM1_acknowledgement.REQ).

Erfindungsgemäß werden von einem Netzwerkelement RS die beiden Abstrakten Nachrichten N3 (*MM1_notification.REQ =* Benachrichtigung über eine MM) und/oder N6 (*MM1_retrieve.RES =* Zustellung der MM) um ein weiteres Informationselement ergänzt, wenn das Netzwerkelement RS die geforderte Antwortvergebührung-Funktionalität unterstützt. Das neue Informationselement könnte beispielsweise "Reply-Charging-Support" heißen. Es gibt Aufschluß darüber, ob das Netzwerkelement RS (oder allgemeiner: der MMS Dienstanbieter) die Antwortvergebührung-Funktionalität unterstützt. Die Tabellen 1 und 2 zeigen die erfindungsgemäßen Zusätze, d.h. das neue Informationselement "Reply-Charging-Support", in den Abstrakten Nachrichten N3 (*MM1_notification.REQ*) und N6 (*MM1_retrieve.RES*), das in beiden Fällen vorzugsweise hinter das bekannte Informationselement "Reply-Charging" eingefügt wird.

**Tab. 1: Zusätzliches Informationselement in den Abstrakten Nachricht N3 (MM1_notification.REQ) und N6 (MM1_retrieve.RES) gemäß Fall 1.**

| **Informationselement** | **Anwesenheit** | **Beschreibung** |
|---|---|---|
| "Reply-Charging-Support" | Optional | Information, daß der MMS Dienstanbieter die Antwortvergebührung-Funktionalität unterstützt. |

Ein Netzwerkelement RS, der die geforderte Antwortvergebührung- Funktionalität nicht unterstützt, reicht bevorzugt weiterhin alle für ihn unbekannten Informatonselemente unverändert durch, ohne das Informationselement "Reply-Charging-Support" zu ergänzen. Die Empfangsapplikation UAB des Empfängers kann auf diese Weise erkennen, ob die Antwortvergebührung-Funktionalität im MMSE seines MMS Dienstanbieters unterstützt wird oder nicht und dementsprechend reagieren. Mit anderen Worten: Nur wenn das vom Netzwerkelement RS gesetzte Informationselement "Reply-Charging-Support" in den Abstrakten Nachrichten N3 (*MM1_notification.REQ*) und/oder N6 (*MM1_retrieve.RES*) vorhanden ist, kann sich der Empfänger der Original-MM beim Abschicken einer entsprechend gekennzeichneten Antwort-MM sicher sein, daß die Antwortvergebührung-Funktionalität vom MMS Dienstanbieter unterstützt wird.

Um den Komfort der Antwortvergebührung-Funktionalität zu erhöhen, wird das oben neu definierte Informationselement "Reply-Charging-Support" vorzugsweise auch in die Abstrakte Nachricht N2 (*MM1_submit.RES*) eingefügt, mit welcher der korrekte Empfang einer MM nach dem Absenden vom Netzwerkelement RS bestätigt wird (siehe Fig. 2). Auf diese Weise kann der Sendeapplikation UAA 1 nach dem Abschicken einer Original-MM mit Antwortvergebührung-Kennung ebenso wie die Empfangsapplikation UAB 2 nach dem Abschicken einer Antwort-MM mit entsprechender Kennzeichnung darüber informiert werden, ob der MMS Dienstanbieter die geforderte Antwortvergebührung-Funktionalität unterstützt oder nicht. Tabelle 2 zeigt das zusätzliche Informationselement "Reply-Charging-Support" für die Abstrakte Nachricht N2 (*MM1_submit.RES*), das vorzugsweise hinter das bekannte Informationselement "Message ID" eingefügt wird.

**Tab. 2: Zusätzliches Informationselement in der Abstrakten Nachricht N2 (MM1_submit.RES) gemäß Fall 1.**

| **Informationselement** | **Anwesenheit** | **Beschreibung** |
|---|---|---|
| "Reply-Charging-Support" | Optional | Information, daß der MMS Dienstanbieter die Antwortvergebührung-Funktionalität unterstützt. |

### II. Fall 2: Antwortvergebührung zwischen zwei unterschiedlichen MMSEs

Im Folgenden wird der Fall betrachtet, daß die Sendeapplikation UAA und die Empfangsapplikation UAB den MMS von unterschiedlichen MMS Dienstanbietern in Anspruch nehmen, d.h. eine MM mit Antwortvergebührung-Kennung wird zwischen zwei MMSEs transportiert. Eine Antwortvergebührung funktioniert in diesem Fall nur dann einwandfrei, wenn neben der Sende- und Empfangsapplikation sowohl das Netzwerkelement RSA des Absenders als auch das Netzwerkelement RSB des Empfängers die Antwortvergebührung-Funktionalität unterstützen. Das Kompatibilitätsproblem bei der Antwortvergebührung zwischen verschiedenen MMSEs wird hierbei erfindungsgemäß ermöglicht, indem zusätzliche Informationen beim Transport einer MM mitübertragen werden, die Aufschluß darüber geben, ob die Antwortvergebührung-Funktionalität vom entsprechenden Netzwerkelement (RSA, RSB) unterstützt wird.

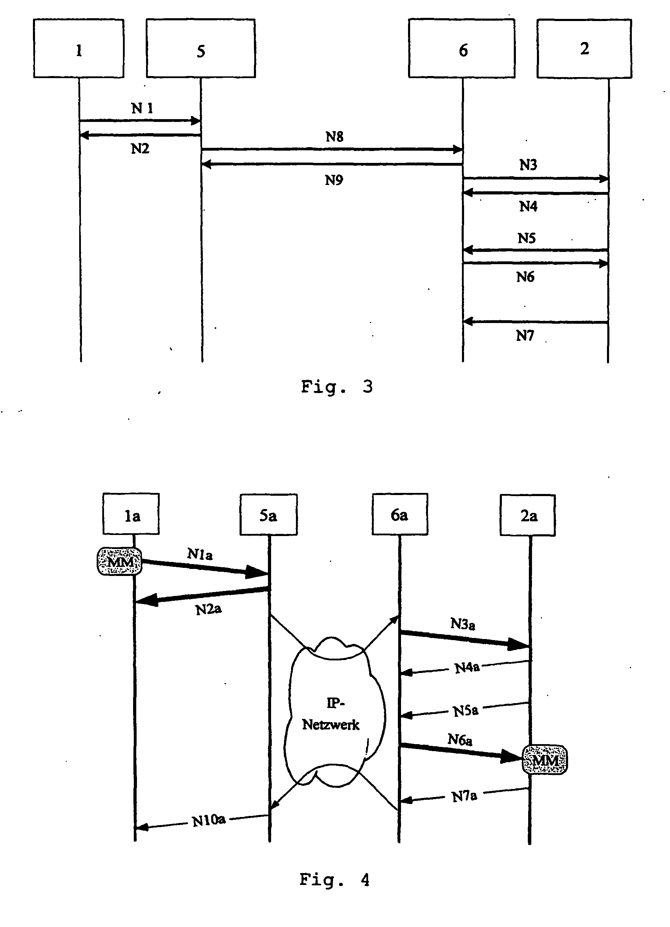

Fig. 3 zeigt eine entsprechende Erweiterung des Transaktionsflußdiagramms von Fig. 2. Zusätzlich zu den dort dargestellten Abstrakten Nachrichten sind hier auch die Abstrakten Nachrichten für die Schnittstelle MM4 (vergleiche auch Fig. 1) dargestellt.

Gemäß der Fig. 3 erstellt Benutzer A eine MM, kennzeichnet diese mit "Reply-Charging" und verschickt sie über die Schnittstelle MM1 an das Netzwerkelement RSA 5 im MMSE seines MMS Dienstanbieters A. Falls dieser die geforderte Antwortvergebührung-Funktionalität unterstützt, leitet erfindungsgemäß das Netzwerkelement RSA 5 in der Abstrakten Nachricht N8 (*MM4_forward.REQ*) - auf die Nachricht N9 (*MM4_forward.RES*) in der Fig. 3 braucht vorliegend nicht eingegangen werden - zusammen mit der MM folgende Informationen an das Netzwerkelement RSB 6 im MMSE des Empfängers weiter:
1. die Bereitschaft des Absenders, die Kosten für eine Antwort-MM vom Empfänger zu übernehmen (Informationselement "Reply-Charging"),
2. eine Frist für das Abschicken einer kostenlosen Antwort-MM (Informationselement "Reply-Charging-Deadline"),
3. die maximale Größe für eine Antwort-MM (Informationselement "Reply-Charging-Size"),
4. die Information, daß bzw. ob der MMS Dienstanbieter des Absenders die geforderte Antwortvergebührung-Funktionalität unterstützt (Informationselement mit dem beispielhaften Namen "Reply-Charging-Support-At-Originator-MMSE"), oder (falls es sich bei der übertragenen MM um eine Antwort-MM handelt; in diesem Fall gilt die Antwort-MM als eine neue Original-MM):

### 5. die Message-ID der (ursprünglichen) Original-MM (Informationselement "Reply-Charging-ID").

Tabelle 3 zeigt die erfindungsgemäß zusätzlichen Informationselemente in der Abstrakten Nachricht N8 (*MM4_forward.REQ*), wobei das neue Informationselement "Reply-Charging-ID" vorzugsweise hinter das bekannte Informationselement "Message ID" und die anderen vier neuen Informationselemente hinter das bekannte Informationselement "Content" eingefügt werden.

**Tab. 3: Zusätzliche Informationselemente in der Abstrakten Nachricht N8 (MM4_forward.REQ) gemäß Fall 2.**

| **Informationselement** | **Anwesenheit** | **Beschreibung** |
|---|---|---|
| "Reply-Charging-ID" | Optional | Im Falle der Antwortvergebührung ist dies die Identifikation der Original-MM, auf die geantwortet wird. |
| "Reply-Charging" | Optional | Information, daß die Antwort auf diese spezifische Original-MM gebührenfrei ist. |
| "Reply-Charging-Deadline" | Optional | Im Falle der Antwortvergebührung der letzte Zeitpunkt der Aufgabe einer Antwort, die dem Empfänger zugestanden wird. |
| "Reply-Charging-Size" | Optional | Im Falle der Antwortvergebührung die maximale Größe einer Antwort-MM, die dem Empfänger zugestanden wird. |
| "Reply-Charging- Support-at-Originator-MMSE" | Optional | Information, daß die Antwortvergebührung-Funktionalitätvom sendeseitigen Netzwerkelement (RS) unterstützt wird. |

Die in Tabelle 3 nicht aufgeführten Informationselemente "Reply-Charging", "Reply-Charging-Deadline" und "Reply-Charging-ID" müssen an dieser Stelle nicht neu definiert werden. Sie kommen bekannntermaßen bereits auf der Schnittstelle MM1 zur Anwendung und werden hier erfindungsgemäß auf die neue Schnittstelle MM4 übertragen. Auf das Informationselement "Reply-Charging-Support-at-Originator-MMSE" wird im Folgenden näher eingegangen:

Die Übernahme des oben im Fall 1 definierten Informationselements "Reply-Charging-Support" zur Übermittlung der Information, daß bzw. ob der MMS Dienstanbieter die geforderte Antwortvergebührung-Funktionalität unterstützt, ist für den hier beschriebenen Fall nicht mehr hinreichend, denn das Netzwerkelement RSB 6 würde das vom Netzwerkelement RSA 5 gesetzte Informationselement "Reply-Charging-Support" unverändert bei der Benachrichtigung bzw. Zustellung der MM an die Empfangsapplikation UAB 2 weiterreichen, wenn er die Antwortvergebührung-Funktionalität nicht unterstützt. Dieses Verhalten könnte von der Empfangsapplikation UAB 2 falsch interpretiert werden. Er benötigt die Information, daß bzw. ob beide an der Übertragung der MM beteiligten Netzwerkelemente 5, 6 (RSA, RSB) die geforderte Antwortvergebührung-Funktionalität unterstützen. Aus diesem Grund wird erfindungsgemäß auf der Schnittstelle MM4 zwischen Netzwerkelement RSA 5 und Netzwerkelement RSB 6 ein anderes Informationselement als auf der Schnittstelle MM1 zwischen Netzwerkelement RSB 6 und Empfangsapplikation UAB 2 definiert. Die beiden neuen Informationselemente könnten beispielsweise "Reply-Charging-Support-at-Originator-MMSE" (Antwortvergebührung-Unterstützung auf Seiten des sendeseitigen MMSE) und "Reply-Charging-Support-at-Recipient-MMSE" (Antwortvergebührung-Unterstützung auf Seiten des empfangsseitigen MMSE) heißen. Sie sind in den Tabellen 3, 5 und 6 dargestellt. In den Abstrakten Nachrichten N3 (Tab. 5) und N6 (Tab. 6) ist das Informationselement "Reply-Charging-Support-at-Recipient-MMSE" vorzugsweise hinter das Informationselement "Reply-Charging" eingefügt.

Wenn das Netzwerkelement RSB die Antwortvergebührung-Funktionalität unterstützt, muß dieser vor der Benachrichtigung des Empfängers bzw. vor der Zustellung der MM überprüfen, ob in der Abstrakten Nachricht N8 (*MM4_forward.REQ*) das entsprechende Informationselement "Reply-Charging-Support-at-Originator-MMSE" enthalten ist. Ist dies der Fall, so muß der das Netzwerkelement RSB nun seinerseits das entsprechende Informationselement "Reply-Charging-Support-at-Recipient-MMSE" in die Abstrakte Nachricht N3 (*MM1_notification.REQ =* Benachrichtigung über die zum Herunterladen bereitliegende MM) bzw. in die Abstrakte Nachricht N6 (*MM1_retrieve.RES =* Zustellung der MM) einfügen. Optional kann er das vom Netzwerkelement RSA gesetzte Informationselement "Reply-Charging-Support-at-Originator-MMSE" nach erfolgter Überprüfung auch wieder löschen, wenn und soweit er es erkennen kann, um die kostbare Luftschnittstelle zu entlasten. Die Empfangsapplikation UAB des Empfängers kann mit diesem Verfahren durch Auswertung der Existenz oder Abwesenheit des Informationselements "Reply-Charging-Support-at-Recipient-MMSE" auf einfache Art und Weise erkennen, ob das Abschicken einer Antwort-MM auf die Original-MM von beiden beteiligten MMS Dienstanbietern bearbeitet werden kann oder nicht.

Das Informationselement "Reply-Charging-Size", das die zulässige Größe der Antort-MM bezeichnet, ist ebenfalls Gegenstand dieser Erfindungsmeldung. Es wird bevorzugt in den Abstrakten Nachrichten N1 (*MM1_submit.REQ*), N8 (*MM4_forward.REQ*), N3 (*MM1_notification.REQ*) und N6 (*MM1_retrieve.RES*) ergänzt, um den Komfort der Antwortvergebührung-Funktionalität zu erhöhen. Mit diesem neuen Informationselement hat der Absender einer Original-MM die Möglichkeit, neben der zeitlichen Frist für die Antwort-MM auch deren maximale Größe festzulegen. Alternativ oder in Ergänzung dazu könnte es aber auch von einem der an der Übertragung der MM beteiligten MMS Dienstanbieter benutzt werden, um die Größe einer Antwort-MM einzuschränken. In den Tabellen 3 bis 6 ist das neu definierte Informationselement "Reply-Charging-Size" in den entsprechenden Abstrakten Nachrichten dargestellt, wobei dieses Informationselement in den Abstrakten Nachrichten N1, N3 und N6 vorzugsweise jeweils hinter dem bekannten Informationselement "Reply-Deadline" eingefügt ist.

**Tab. 4: Zusätzliches Informationselement in der Abstrakten Nachricht N1 (MM1_submit.REQ).**

| **Informationselement** | **Anwesenheit** | **Beschreibung** |
|---|---|---|
| "Reply-Charging-Size" | Optional | Im Falle der Antwort-Vergebührung die maximale Größe einer Antwort-MM, die dem Empfänger zugestanden wird. |
| | | |

**Tab. 5: Zusätzliche Informationselemente in der Abstrakten Nachricht N3 (MM1_notification.REQ) gemäß Fall 2.Zusätzliche Informationselemente in der Abstrakten Nachricht N3 (MM1_notification.REQ) gemäß Fall 2.**

| **Informationselement** | **Anwesenheit** | **Beschreibung** |
|---|---|---|
| "Reply-Charging-Support-At-Recipient-MMSE" | Optional | Information, daß die Antwortvergebührung-Funktionalität vom empfangsseitigen Netzwerkelement unterstützt wird. |
| ... | ... | ... |
| "Reply-Charging-Size" | Optional | Im Falle der Antwortvergebührung die maximale Größe einer Antwort-MM, die dem Empfänger zugestanden wird. |

**Tab. 6: Zusätzliche Informationselemente in der Abstrakten Nachricht N6 (MM1_retrieve.RES) gemäß Fall 2.**

| **Informationselement** | **Anwesenheit** | **Beschreibung** |
|---|---|---|
| "Reply-Charging-Support-At-Recipient-MMSE" | Optional | Information, daß die Antwortvergebührung-Funktionalität vom empfangsseitigen Netzwerkelement unterstützt wird. |
| ... | ... | ... |
| "Reply-Charging-Size" | Optional | Im Falle der Antwortvergebührung die maximale Größe einer Antwort-MM, die dem Empfänger zugestanden wird. |

Analog zu der im Fall 1 beschriebenen Vorgehensweise wird vorteilhafterweise das hier eingeführte Informationselement "Reply-Charging-Support-At-Originator-MMSE" auch in die Abstrakte Nachricht N2 (*MM1_submit.RES*), mit welcher der korrekte Empfang einer MM von einem Netzwerkelement RS bestätigt wird, eingefügt. Dies erhöht den Komfort der Antwortvergebührung-Funktionalität deutlich, denn auf diese Weise kann sowohl die Sendeapplikation UAA nach dem Abschicken einer Original-MM mit Antwortvergebührung-Kennung als auch die Empfangsapplikation UAB nach dem Abschicken einer entsprechend gekennzeichneten Antwort-MM (in diesem Fall ist die Empfangsapplikation UAB der "Originator" der Antwort-MM) darüber informiert werden, ob der jeweilige MMS Dienstanbieter die geforderte Antwortvergebührung-Funktionalität unterstützt oder nicht. Tabelle 7 zeigt das zusätzliche Informationselement "Reply-Charging-Support-At-Originator-MMSE" in der Abstrakten Nachricht N2 (*MM1_submit.RES*), das vorzugsweise hinter das Informationselement "Message ID" eingefügt wird.

**Tab. 7: Zusätzliches Informationselement in der Abstrakten Nachricht N2 (MM1_submit.RES) gemäß Fall 2.**

| **Informationselement** | **Anwesenheit** | **Beschreibung** |
|---|---|---|
| "Reply-Charging-Support-At-Originator-MMSE" | Optional | Information, daß die Antwortvergebührung-Funktionalität durch das Netzwerkelement RS unterstützt wird, wenn eine Original-MM oder eine Antwort-MM aufgegeben wurde. |

### III. Umsetzung der Erfindung in WAP

Nach dem bisherigen Stand der Technik ist eine Implementierung von MMS lediglich über WAP (WAP - Wireless Application Protocol) realisierbar. Zur Überbrückung der Luftschnittstelle (in 3GPP: MM1) zwischen einem MMS-tauglichen Endgerät und dem WAP Gateway ist nach 3GPP TS 22.140 version 4.1.0, Release 4 (s.o.) und WAP-209.102-MMSEncapsulation, 8-February-2001 (Wireless Application Protocol; WAP Multimedia Messaging Service; Message Encapsulation; MMS Draft SCD) die Benutzung des WAP WSP Transfer Protocols (Übertragungsprotokolls) vorgesehen. Deshalb wird im nun folgenden Abschnitt beschrieben, wie die oben zum Zwecke der Antwortvergebührung neu definierten Informationselemente der 3GPP-Abstrakten Nachrichten auf die WAP Nachrichten der WAP Implementierung übertragen werden können. Dabei wird beispielhaft die Ausführungsvariante nach Fall 2 (Antwortvergebührung zwischen zwei MMSEs) umgesetzt, weil sie den allgemeineren Fall wiedergibt und ihr für die Umsetzung in 3GPP und WAP die größeren Chancen einzuräumen sind; denn schließlich entfällt mit ihr die Beschränkung auf nur ein MMSE.

Fig. 4 zeigt ein sogenanntes Transaktionsflußdiagramm in WAP nach heutigem Stand der Technik gemäß WAP-209.102-MMSEncapsulation (s.o.), in dem der Austausch der WAP Nachrichten zwischen den vier beteiligten Instanzen Sendeapplikation 1a (MMS Client A, abgekürzt CA), sendeseitiges Netzwerkelement 5a (MMS Proxy-Relay A, abgekürzt PRA), empfangsseitiges Netzwerkelement 6a (MMS Proxy-Relay B, abgekürzt PRB) und Empfangsapplikation 2a (MMS Client B, abgekürzt CB) bei der Übertragung einer MM dargestellt ist. Die von dieser Erfindungsmeldung betroffenen WAP Nachrichten N1a (*M-Send.req*), N2a (*M-Send.conf*), N3a (*M-Notification.ind*) und N6a (*M-Retrieve.conf*) sind dabei in Fettdruck hervorgehoben. Hierbei entspricht die WAP Nachricht N1a der o.g. Nachricht N1, die WAP Nachricht N2a der o.g. Nachricht N2, usw.. Zusätzlich ist die bekannte Nachricht N10a *(M-Delivery.ind)* dargestellt. Als Hinweis sei hier angemerkt, daß die in 3GPP definierten Begriffe MMS User Agent, MMS Relay/Server und MMSE in WAP nicht existieren. Deshalb werden in diesem Abschnitt ausschließlich die Begriffe MMS Client und MMS Proxy-Relay bzw. deren Abkürzungen benutzt, die aber die gleichen Instanzen meinen. Für den 3GPP Begriff MMSE existiert in WAP kein analoger Ausdruck.

Nach WAP-209.102-MMSEncapsulation (s.o.) besteht ein Kopf-Feld in einer WAP Nachricht aus einem Feld-Namen, gefolgt von einem Feld-Wert, der aus mindestens einem Oktett (8-bit-Wort) besteht. Die Zuweisung von hexadezimalen Werten zu den Feld-Namen ist in Tabelle 8 aufgeführt. Derzeit existieren 24 Feld-Namen. Die in dieser Erfindungsmeldung neu definierten Feld-Namen beginnen deshalb bevorzugt bei Nummer 25 (hexadezimal: 0x19). Sie sind in Tabelle 9 dargestellt.

**Tab. 8: Zuweisung der Feld-Namen (nach Stand der Technik).**

| **Name** | **Zugewiesene Nummer** |
|---|---|
| Bcc | 0x01 |
| Cc | 0x02 |
| Content-Location (Inhalt-Ort) | 0x03 |
| Content-Type (Inhaltstyp) | 0x04 |
| Date (Datum) | 0x05 |
| Delivery-Report (Auslieferungsbericht) | 0x06 |
| Delivery-Time (Auslieferungszeit) | 0x07 |
| Expiry (Ablauf) | 0x08 |
| From (Von) | 0x09 |
| Message-Class (Nachrichtenklasse) | 0x0A |
| Message-ID (Nachrichten-Identifikationsnummer) | 0x0B |
| Message-Type (Nachrichtentyp) | 0x0C |
| MMS-Version | 0x0D |
| Message-Size (Nachrichten-Größe) | 0x0E |
| Priority (Priorität) | 0x0F |
| Read-Reply (Lesen-Antworten) | 0x10 |
| Report-Allowed (Bericht zugelassen) | 0x11 |
| Response-Status (Antwortstatus) | 0x12 |
| Response-Text (Antwort-Text) | 0x13 |
| Sender-Visibility (Absender-Sichtbarkeit) | 0x14 |
| Status | 0x15 |
| Subject (Betreff) | 0x16 |
| To (An) | 0x17 |
| Transaction-Id (Übertragungsidentifikationsnummer) | 0x18 |

**Tab. 9: Erfindungsgemäß neu definierte Feld-Namen.**

| **Name** | **Zugewiesene Nummer** |
|---|---|
| Reply-Charging-Support-At-Originator-MMS-Proxy-Relay (Antwortvergebührung-Unterstützung-Beim-Ursprungs-MMS-Proxy-Relay) | 0x19 |
| Reply-Charging-Support-At-Recipient-MMS-Proxy-Relay (Antwortvergebührung-Unterstützung-Beim-Empfangs-MMS-Proxy-Relay) | 0x1A |
| Reply-Charging-Size (Antwortvergebührung-Größe) | 0x1B |

Da nach WAP-209.102-MMSEncapsulation (s.o.) ein Kopf-Feld in einer WAP Nachricht immer aus einem Feld-Namen und aus einem Feld-Wert besteht, muß für jedes der hier neu definierten Kopf-Felder mindestens ein Feld-Wert definiert werden. Dies wird im Folgenden näher erläutert:

Es existieren insgesamt vier Möglichkeiten, den Feld-Wert eines Kopf-Feldes zu kodieren, wobei das erste Oktett über die Art und Länge der Kodierung entscheidet (siehe Tabelle 10).

**Tab. 10: Die vier Möglichkeiten für die Kodierung des Feld-Wertes (Stand der Technik).**

| **Erstes Oktett des Feld-Wertes** | **Mögliche Kombinationen** | **Anzahl der nachfolgenden Oktette** |
|---|---|---|
| 0...30 | 31 | 0...30 |
| 31 | 1 | > 30 |
| 32...127 (Text) | 96 | > 0 |
| 128...255 | 128 | 0 |
| | | |

Um die zu übertragenden Datenmengen auf der Luftschnittstelle gering zu halten, stammen die Feld-Werte für die beiden neu definierten Kopf-Felder "Reply-Charging-Support-At-Originator-MMS-Proxy-Relay" und "Reply-Charging-Support-At-Recipient-MMS-Proxy-Relay" bevorzugt ausschließlich aus dem vierten Wertebereich (128 bis 255). Eine mögliche Definition der neuen Kopf-Felder "Reply-Charging-Support-At-Originator-MMS-Proxy-Relay" und "Reply-Charging-Support-At-Recipient-MMS-Proxy-Relay" könnte wie folgt aussehen:
**Feld-Name:** Reply-Charging-Support-At-Originator-MMS-Proxy-Relay (Antwortvergebührung-Unterstützung-Beim-Ursprungs-MMS-Proxy-Relay)
**Feld-Werte:** Reply-Charging-Support-At-Originator-MMS-Proxy-Relay-value = Yes | No (Antwortvergebührung-Unterstützung-Beim-Ursprungs-MMS-Proxy-Relay-Wert = Ja | Nein)
   Yes = <Octet 128> (Ja = <Oktett 128>)
   No = <Octet 129> (Nein = <Oktett 129>)

**Feld-Name:** Reply-Charging-Support-At-Recipient-MMS-Proxy-Relay (Antwortvergebührung-Unterstützung-Beim-Empfangs-MMS-Proxy-Relay)
**Feld-Werte:** Reply-Charging-Support-At-Recipient-MMS-Proxy-Relay-value = Yes | No (Antwortvergebührung-Unterstützung-Beim-Empfangs-MMS-Proxy-Relay Wert = Ja | Nein)
   Yes = <Octet 128> (Ja = <Oktett 128>)
   No = <Octet 129> (Nein = <Oktett 129>)

Der Feld-Wert für das neu definierte Kopf-Feld "Reply-Charging-Size" könnte entweder stufenweise (Antwort-MM darf bis zu X, Y oder Z kilo-Byte groß werden) oder konkret (Antwort-MM darf nur X kilo-Byte groß werden) angegeben werden. Eine mögliche Definition des neuen Kopf-Feldes "Reply-Charging-Size" mit einer Abstufung der möglichen Größe einer Antwort-Nachricht könnte wie folgt aussehen (Wertebereich 4):
**Feld-Name:** Reply-Charging-Size (Antwortvergebührung-Größe)
**Feld-Werte:** Reply-Charging-Size-value = 200 | 400 | 600 | 800 (Antwortvergebührung-Größe-Wert = 200 | 400 | 600 | 800)
   200 = <Octet 128> (200 = <Oktett 128>)
   400 = <Octet 129> (400 = <Oktett 129>)
   600 = <Octet 130> (600 = <Oktett 130>)
   800 = <Octet 131> (800 = <Oktett 131>)

Eine mögliche Definition des neuen Kopf-Feldes "Reply-Charging-Size" mit einer konkreten Angabe der möglichen Größe einer Antwort-Nachricht könnte wie folgt aussehen (Wertebereich 1) :
**Feld-Name:** Reply-Charging-Size (Antwortvergebührung-Größe)
**Feld-Wert:** Reply-Charging-Size-value = Long-integer (Antwortvergebührung-Größe-Wert)

Auf weitere Kodierungsmöglichkeiten wird an dieser Stelle nicht näher eingegangen. Es ist offensichtlich, daß im Rahmen dieser Erfindung verschiedene Kodierungsmöglichkeiten existieren.

Die erfindungsgemäßen Ergänzungen in den WAP Nachrichten N1a (*M-Send.req*), N2a (*M-Send.conf*), N3a (*M-Notification.ind*) und N6a (*M-Retrieve.conf*) sind in den Tabellen 11 bis 14 dargestellt. Die übrigen zur Realisierung der Antwortvergebührung-Funktionalität innerhalb eines MMSEs notwendigen Kopf-Felder sind dort nicht dargestellt, weil die genaue Umsetzung der in 3GPP definierten Informationselemente im WAP-Forum derzeit noch nicht abgeschlossen ist. In der WAP Nachricht N1a (*M-Send.req*) wurde das Kopf-Feld "Reply-Charging-Size"- vorzugsweise eingefügt hinter das Kopf-Feld "Content-Type" - ergänzt, mit dem die Applikation CA 1a, der die Antwortvergebührung-Funktionalität nutzen möchte, beim Abschicken der MM zusätzlich zur Angabe einer Frist auch die Größe der Antwort-MM beschränken kann.

**Tab. 11: Neu definiertes Kopf-Feld in der WAP Nachricht N1a (M-Send.req).**

| **Name** | **Inhalt** | **Kommentar** |
|---|---|---|
| "X-Mms-Reply-Charging-Size" | Antwortvergebührung-Größe-Wert | Optional. Spezifiziert die Größe einer Antwort-MM. |

In der WAP Nachricht N2a (*M-Send.conf*) wurde das Kopf-Feld "Reply-Charging-Support-At-Originator-MMS-Proxy-Relay" - vorzugsweise eingefügt hinter das Kopf-Feld "Message-ID" - ergänzt, mit dem der Sendeapplikation CA 1a, der eine MM abgeschickt hat, mitgeteilt werden kann, ob das entsprechende Netzwerkelement PRA 5a die Bereitschaft des Absenders zur Übernahme der Kosten für eine Antwort-MM oder eine Antwort-MM auf eine zuvor empfangene und entsprechend kennzeichnete Original-MM verstanden/akzeptiert hat.

**Tab. 12: Neu definiertes Kopf-Feld in der WAP Nachricht N2 (M-Send.conf).**

| **Name** | **Inhalt** | **Kommentar** |
|---|---|---|
| "X-Mms-Reply-Charging-Support-At-Originator-MMS-Proxy-Relay" | Antwortvergebührung-Unterstützung-Beim-Ursprungs-MMS-Proxy-Relay-Wert | Optional. Hinweis, ob die Antwortvergebührung auf der Sendeseite unterstützt wird. |

Die WAP Nachrichten N3a (*M-Notification.ind*) und N6a (*M-Retrieve.conf*) enthalten (neben der eventuell vorhandenen Information, daß das Netzwerkelement PR 5a des Absenders die Antwortvergebührung-Funktionalität unterstützt) das vom Netzwerkelement PR 6a des Empfängers gesetzte Kopf-Feld "Reply-Charging-Support-At-Recipient-MMS-Proxy-Relay". Für die Empfangsapplikation CB 2a des Empfängers ist aber nur die Existenz oder Abwesenheit des Kopf-Feldes "Reply-Charging-Support-At-Recipient-MMS-Proxy-Relay" von Bedeutung. Dies wird bevorzugt nur dann gesetzt, wenn sowohl das sendeseitige Netzwerkelement PRA 5a als auch das empfangsseitige Netzwerkelement PRB 6a die Antwortvergebührung-Funktionalität unterstützen. Ist es vorhanden, so kann die Empfangsapplikation CB 2a die Gewißheit haben, daß eine Antwort-MM auf eine zuvor empfangene Original-MM von beiden beteiligten MMS Dienstanbietern verstanden wird. Das Kopf-Feld "X-Mms-Reply-Charging-Support-At-Recipient-MMS-Proxy-Relay" ist bei der WAP Nachricht N3a vorzugsweise hinter,das bekannte Kopffeld "M-Mms-Content-Location" und bei der WAP Nachricht N6a vorzugsweise hinter das bekannte Kopffeld "Content Type" eingefügt. Das Kopf-Feld "X-Mms-Reply-Charging-Size" ist bei der WAP Nachricht N3a vorzugsweise hinter das bekannte Kopffeld "X-Mms-Expiry" und bei der WAP Nachricht N6a vorzugsweise hinter das bekannte Kopffeld " X-Mms-Read-Reply " eingefügt.

**Tab. 13: Neu definiertes Kopf-Feld in der WAP Nachricht N3a (M-Notification.ind).**

| **Name** | **Inhalt** | **Kommentar** |
|---|---|---|
| "X-Mms-Reply-Charging-Size" | Antwortvergebührung-Größe-Wert | Optional. Spezifiziert die Größe einer Antwort-MM. |
| ... | ... | ... |
| "X-Mms-Reply-Charging-Support-At-Recipient-MMS-Proxy-Relay" | Antwortvergebührung-Unterstützung-Beim-Empfangs-MMS-Proxy-Relay-Wert | Optional. Hinweis, ob die Antwortvergebührung auf der Empfangsseite unterstützt wird. |

**Tab. 14: Neu definiertes Kopf-Feld in der WAP Nachricht N6a (M-Retrieve.conf).**

| **Name** | **Inhalt** | **Kommentar** |
|---|---|---|
| "X-Mms-Reply-Charging-Size" | Antwortvergebührung-Größe-Wert | Optional. Spezifiziert die Größe einer Antwort-MM. |
| ... | ... | ... |
| "X-Mms-Reply-Charging-Support-At-Recipient-MMS-Proxy-Relay" | Antwortvergebührung-Unterstützung-Beim-Empfangs-MMS-Proxy-Relay-Wert | Optional. Hinweis, ob die Antwortvergebührung auf der Empfangsseite unterstützt wird. |

Die Erfindung gemäß ihrem ersten Aspekt wurde anhand der Antwortvergebührung-Funktionalität im Detail erläutert, ist aber ebenso für andere durch Mobilfunkteilnehmer angeforderte Funktionalitäten einsetzbar.

Des weiteren läßt sich die Erfindung nicht nur für multimediale Nachrichten einsetzen, sondern beispielsweise auch entsprechend bei der Versendung bzw. dem Empfang von SMS-Nachrichten.

### Bezugszeichenliste

- 1: Sendeapplikation (MMS User Agent A = UAA)
- 1a: Sendeapplikation (MMS Client A = CA)
- 2: Empfangsapplikation (MMS User Agent B = UAB)
- 2a: Empfangsapplikation (MMS Client B = CB)
- 3: MMS Diensteanbieter (MMS Service Provider A)
- 4: MMS Diensteanbieter (MMS Service Provider B)
- 5: sendeseitige Netzwerkeinheit (MMS Relay Server A = RSA)
- 5a: sendeseitige Netzwerkeinheit (MMS Proxy-Relay A = RPA)
- 6: empfangsseitige Netzwerkeinheit (MMS Relay Server B = RSB)
- 6a: empfangsseitige Netzwerkeinheit (MMS Proxy-Relay B = PRB)
- 7: Funknetzwerk
- 8: Funknetzwerk
- MM1: Schnittstelle
- MM4: Schnittstelle
- N1: Nachricht *MM1_submit.REQ*
- N1a: WAP Nachricht *M-Send.req*
- N2: Nachricht *MM1_submit.RES*
- N2a: WAP Nachricht *M-Send.conf*
- N3: Nachricht *MM1_notification.REQ*
- N3a: WAP Nachricht M-*Notification.ind*
- N4: Nachricht *MM1_notification.RES*
- N4a: WAP Nachricht *M-NotifyResp.req*
- N5: Nachricht MM1_retrieve.REQ
- N5a: WAP Nachricht *WSP GET*
- N6: Nachricht M_retrieve.RES
- N6a: WAP Nachricht *M-Retrieve.conf*
- N7: Nachricht *MM1_acknowledgement.REQ*
- N7a: WAP Nachricht *M-Acknowledge.ind*
- N8: Nachricht *MM4_forward.REQ*
- N9: Nachricht *MM4_forward.RES*
- N10a: WAP Nachricht *M-Delivery.ind*

## Patentansprüche

1. Verfahren zur Übertragung einer Nachricht, insbesondere einer Multimedia-Nachricht, über ein Kommunikationsnetz von einer Sendeapplikation (MMS User Agent A, MMS Client A) über eine sendeseitige Netzwerkeinheit (MMS Relay/Server, MMS Proxy-Relay) und eine empfangsseitige Netzwerkeinheit (MMS Relay/Server, MMS Proxy-Relay), an eine Empfangsapplikation (MMS User Agent B, MMS Client B),
- wobei die sendeseitige Netzwerkeinheit und die empfangsseitige Netzwerkeinheit identisch oder voneinander verschieden sind und im Zuständigkeitsbereich eines oder zweier Diensteanbieter (MMS Service Provider) liegen, und
- wobei mit der Nachricht eine Reply-Charging-Funktionalität im Zuständigkeitsbereich mindestens eines Diensteanbieters angefordert wird,
**dadurch gekennzeichnet,**
**daß** mit der Nachricht Informationen von der empfangsseitigen Netzwerkeinheit (MMS Relay/Server, MMS Proxy-Relay) hinsichtlich ihrer Unterstützung der angeforderten Reply-Charging Funktionalität an die Empfangsapplikation (MMS User Agent B, MMS Client B) übermittelt wird.

2. Verfahren nach Anspruch 1,
**dadurch gekennzeichnet,**
**daß** die Nachricht Informationen hinsichtlich der Bereitschaft des Absenders zur Übernahme der Kosten für die Antwort-Nachricht vom Empfänger (Reply-Charging) umfaßt, wobei die Informationen von der oder den Netzwerkeinheiten (MMS Relay/ Server, MMS Proxy-Relay) hinsichtlich ihrer Unterstützung der Reply-Charging Funktionalität (Informationselement "Reply-Charging-Support"; Informationselement "Reply-Charging-Support-At-Originator-MMSE"; Informationselement "Reply-Charging-Support-At-Recipient-MMSE") an mindestens ein anderes am Datenaustausch beteiligtes Gerät (MMS User Agent A, MMS Client A; MMS User Agent B, MMS Client B; MMS Relay Server A, MMS Proxy-Relay A; MMS Relay Server B, MMS Proxy-Relay B) übermittelt oder von letzterem empfangen wird.

3. Verfahren nach Anspruch 1 oder 2,
**dadurch gekennzeichnet,**
**daß** die Information hinsichtlich der Unterstützung der angeforderten Funktionalität durch die bzgl. der Original-Nachricht oder der Antwort-Nachricht sendeseitige Netzwerkeinheit (MMS Relay Server A, MMS Proxy-Relay A; MMS Relay Server B, MMS Proxy-Relay B) an die empfangsseitige Netzwerkeinheit (MMS Relay Server B, MMS Proxy-Relay B; MMS Relay Server A, MMS Proxy-Relay A) gesendet oder durch letztere empfangen und ausgewertet wird (Informationselement "Reply-Charging-Support-At-Originator-MMSE").

4. Verfahren nach einem der vorhergehenden Ansprüche,
**dadurch gekennzeichnet,**
**daß** bei Unterstützung der angeforderten Funktionalität durch die beiden voneinander verschiedenen Netzwerkeinheiten (MMS Relay/Server A, MMS Proxy-Relay A; MMS Relay/Server B, MMS Proxy-Relay B) eine entsprechende Information (Informationselement "Reply-Charging-Support-At-Recipient-MMSE") an die Empfangsapplikation (MMS User Agent B, MMS Client B; MMS User Agent A, MMS Client A) übermittelt oder von dieser empfangen wird.

5. Verfahren nach einem der vorhergehenden Ansprüche,
**dadurch gekennzeichnet,**
**daß** bei Unterstützung der angeforderten Funktionalität durch beide Netzwerkeinheiten die Information hinsichtlich der Unterstützung der angeforderten Funktionalität durch die sendeseitige Netzwerkeinheit (Informationselement "Reply-Charging-Support-At-Originator-MMSE") von der empfangsseitigen Netzwerkeinheit gelöscht und nicht an die Empfangsapplikation übermittelt wird.

6. Verfahren nach einem der vorhergehenden Ansprüche,
**dadurch gekennzeichnet,**
**daß** die Informationen zur Unterstützung der angeforderten Funktionalität in der Nachricht *MM1_*submit.RES bzw. *M-Send.conf* (in WAP, Wireless Application Protocol) von dem bzgl. der Original-Nachricht oder der Antwort-Nachricht sendeseitigen Netzwerkeinheit an die entsprechende Sendeapplikation mitübermittelt oder von dieser empfangen wird.

7. Verfahren nach Anspruch 6,
**dadurch gekennzeichnet,**
**daß** in der WAP-Nachricht *M-Send.conf* ein neues Kopffeld ("Reply-Charging-Support-At-Originator-MMS-Proxy-Relay") mit hexadezimaler Codierung des Feld-Namens verwendet wird, dessen Feld-Werte bevorzugt im Falle einer Unterstützung der angeforderten Funktionalität das Oktett <Octet 128> und im Falle einer Nicht-Unterstützung das Oktett <Octet 129> umfassen.

8. Verfahren nach einem der vorhergehenden Ansprüche, **dadurch gekennzeichnet,**
**daß** die Informationen zur Unterstützung der angeforderten Funktionalität in den Nachrichten *MM1_notification.REQ* bzw. *M-notification.ind* (in WAP) und/oder *MM1_retrieve.RES* bzw. *M-Retrieve.conf* (in WAP) von der empfangsseitigen Netzwerkeinheit an die Empfangsapplikation mitübermittelt oder von letzterer empfangen werden.

9. Verfahren nach Anspruch 8,
**dadurch gekennzeichnet,**
**daß** in den WAP-Nachrichten *M-Notification.ind* und/oder *M-Retrieve.conf* ein neues Kopffeld ("Reply-Charging-Support-At-Recipient-MMS-Proxy-Relay") mit hexadezimaler Codierung des Feld-Namens verwendet wird, dessen Feld-Werte bevorzugt im Falle einer Unterstützung der angeforderten Funktionalität das Oktett <Octet 128> und im Falle einer Nicht-Unterstützung das Oktett <Octet 129> umfassen.

10. Verfahren nach einem der vorhergehenden Ansprüche,
**dadurch gekennzeichnet,**
**daß** die Empfangsapplikation das Vorhandensein oder das NichtVorhandensein der Information hinsichtlich der Unterstützung der angeforderten Funktionalität durch die sende- und/oder empfangsseitige Netzwerkeinheit auswertet und die Ausgabe einer entsprechenden Information für den Bediener veranlaßt oder unterläßt.

11. Verfahren nach einem der vorhergehenden Ansprüche,
**dadurch gekennzeichnet,**
**daß** für die Reply-Charging Funktionalität bei der Übertragung einer Nachricht, insbesondere einer Multimedia-Nachricht, über ein Kommunikationsnetz von einer Sendeapplikation (MMS User Agent A, MMS Client A) über eine sendeseitige Netzwerkeinheit (MMS Relay/Server A, MMS Proxy-Relay A) und eine von dieser verschiedenen empfängerseitigen Netzwerkeinheit (MMS Relay/Server B, MMS Proxy-Relay B) an eine Empfangsapplikation (MMS User Agent B, MMS Client B), wobei die sende- und die empfangsseitige Netzwerkeinheit im Zuständigkeitsbereich zweier Diensteanbieter (MMS Service Provider) liegen, wobei die Nachricht Informationen hinsichtlich der Bereitschaft des Absenders zur Übernahme der Kosten für die Antwort-Nachricht vom Empfänger (Reply-Charging) umfaßt, mindestens eine der folgenden Informationen von der sendeseitigen Netzwerkeinheit zur empfangsseitigen Netzwerkeinheit übermittelt oder durch letztere empfangen wird:
• die Bereitschaft des Absenders zur Übernahme der Kosten für die Antwort-Nachricht vom Empfänger (Informationselement "Reply-Charging");
• eine Frist für das Abschicken der kostenlosen Antwort-Nachricht (Informationselement "Reply-Charging-Deadline");
• die maximale Größe der Antwort-Nachricht (Informationselement "Reply-Charging-Size");
• die Nachrichten-Identifikationsnummer (Message-ID) der Original-Nachricht (Informationselement "Reply-Charging-ID") bei der Übermittlung der Antwort-Nachricht.

12. Verfahren nach einem der vorhergehenden Ansprüche,
**dadurch gekennzeichnet,**
**daß** bei voneinander verschiedener sende- und empfangsseitiger Netzwerkeinheit mindestens eine der genannten Informationen in der Nachricht *MM4_forward.REQ* mitübermittelt oder empfangen wird.

13. Netzwerkeinheit (MMS Relay/Server, MMS Proxy-Relay) im Zuständigkeitsbereich eines Diensteanbieters (MMS Service Provider), die einer Sendeapplikation (MMS User Agent A, MMS Client A) und/oder einer Empfangsapplikation (MMS User Agent B, MMS Client B) zugeordnet ist, insbesondere Netzwerkeinheit eines UMTS-Netzes, insbesondere zur Durchführung von Verfahrensschritten gemäß einem der vorhergehenden Ansprüche, wobei über die Netzwerkeinheit Nachrichten, insbesondere Multimedia-Nachrichten, von einer Sendeapplikation an eine Empfangsapplikation übermittelbar sind, wobei mit der Nachricht eine Reply-Charging-Funktionalität im Zuständigkeitsbereich eines Diensteanbieters angefordert wird,
**dadurch gekennzeichnet,**
**daß** die Netzwerkeinheit derart ausgebildet ist, daß sie mit der Nachricht Informationen hinsichtlich ihrer Unterstützung der angeforderten Reply-Charging Funktionalität an die Empfangsapplikation (MMS User Agent B, MMS Client B) übermitteln oder von letzterem empfangen kann.

14. Netzwerkeinheit (MMS Relay/Server, MMS Proxy-Relay) nach Anspruch 13, im Zuständigkeitsbereich eines Diensteanbieters (MMS Service Provider), wobei die Netzwerkeinheit einer Sendeapplikation (MMS User Agent A, MMS Client A) und/oder einer Empfangsapplikation (MMS User Agent B, MMS Client B) zugeordnet ist, insbesondere Netzwerkeinheit eines UMTS-Netzes, insbesondere zur Durchführung von Verfahrensschritten gemäß einem der Ansprüche 1 bis 12, wobei über die Netzwerkeinheit Nachrichten, insbesondere Multimedia-Nachrichten, von einer Sendeapplikation an eine Empfangsapplikation übermittelbar sind, wobei eine Nachricht Informationen hinsichtlich der Bereitschaft des Absenders zur Übernahme der Kosten für die Antwort-Nachricht vom Empfänger (Reply-Charging) umfaßt,
**dadurch gekennzeichnet,**
**daß** die Netzwerkeinheit derart ausgebildet ist, daß sie mindestens eine der folgenden Informationen übermitteln bzw. empfangen und auswerten kann:
• Übermittlung an die Empfangsapplikation: die Bereitschaft des Absenders zur Übernahme der Kosten für eine Antwort-Nachricht vom Empfänger (Informationselement "Reply-Charging") für den Fall der Verschiedenheit von sende- und empfangsseitiger Netzwerkeinheit;
• Übermittlung durch die sendeseitige Netzwerkeinheit an oder Empfang durch die empfangsseitige Netzwerkeinheit bei Verschiedenheit von sende- und empfangsseitiger Netzwerkeinheit: eine Frist für das Abschicken einer kostenlosen Antwort-Nachricht (Informationselement "Reply-Charging-Deadline");
• Übermittlung an oder Empfang durch ein anderes am Datenaustausch beteiligtes Gerät (MMS User Agent B, MMS Client B; MMS Relay Server A, MMS Proxy-Relay A; MMS Relay Server B, MMS Proxy-Relay B): die maximale Größe für eine Antwort-Nachricht (Informationselement "Reply-Charging-Size");
• Übermittlung an oder Empfang durch die bzgl. der Antwort-Nachricht empfangsseitige Netzwerkeinheit: die Nachrichten-Identifikationsnummer (Message-ID) der Original-Nachricht (Informationselement "Reply-Charging-ID") bei der Übermittlung der Antwort-Nachricht.

15. Teilnehmergerät zur Kommunikation in einem Kommunikationsnetz, insbesondere zur Durchführung von Verfahrensschritten gemäß einem der Ansprüche 1 bis 12, mit zumindest einer Empfangsapplikation (MMS User Agent A, MMS Client A, MMS User Agent B, MMS Client B) zum Empfangen von Nachrichten, insbesondere Multimedia-Nachrichten, von einer Netzwerkeinheit (MMS Relay/Server, MMS Proxy-Relay) im Zuständigkeitsbereich eines Diensteanbieters (MMS Service Provider), insbesondere einer Netzwerkeinheit gemäß Anspruch 13 oder 14, wobei die Nachricht eine Anforderung einer Reply-Charging Funktionalität im Zuständigkeitsbereich eines Diensteanbieters enthält,
**dadurch gekennzeichnet,**
**daß** die Vorrichtung derart ausgebildet ist, daß sie in die Nachricht eingefügte Informationen hinsichtlich der Unterstützung der angeforderten Reply-Charging Funktionalität durch die beteiligte Netzwerkeinheit empfangen und auswerten kann.

16. Teilnehmergerät nach Anspruch 15, zur Kommunikation in einem Kommunikationsnetz, insbesondere zur Durchführung von Verfahrensschritten gemäß einem der Ansprüche 1 bis 12, mit einer Sende- und/oder Empfangsapplikation (MMS User Agent A, MMS Client A; MMS User Agent B, MMS Client B) zum Senden und/oder Empfangen von Nachrichten, insbesondere Multimedia-Nachrichten, von einer Netzwerkeinheit (MMS Relay/Server, MMS Proxy-Relay) im Zuständigkeitsbereich eines Diensteanbieters (MMS Service Provider), insbesondere einer Netzwerkeinheit gemäß Anspruch 13 oder 14, wobei die Nachrichten Informationen hinsichtlich der Bereitschaft des Absenders zur Übernahme der Kosten für die Antwort-Nachricht vom Empfänger (Reply-Charging) umfaßen können,
**dadurch gekennzeichnet,**
**daß** die Vorrichtung derart ausgebildet ist, daß sie mindestens eine der folgenden Informationen übermitteln bzw. empfangen kann:
• Empfang und Auswertung von Informationen hinsichtlich der Bereitschaft des Absenders zur Übernahme der Kosten für eine Antwort-Nachricht vom Empfänger (Informationselement "Reply-Charging") für den Fall der Verschiedenheit von sende- und empfangsseitiger Netzwerkeinheit;
• Übermittlung und/oder Empfang von Informationen zur maximal zulässigen Größe der Antwort-Nachricht (Informationselement "Reply-Charging-Size");
• Empfang und Auswertung von Informationen hinsichtlich der Unterstützung der Reply-Charging Funktionalität durch die bzgl. der Original-Nachricht oder der Antwort-Nachricht sendeseitige Netzwerkeinheit (Informationselement "Reply-Charging-Support-At-Originator-MMSE");
• Empfang und Auswertung von Informationen hinsichtlich der Unterstützung der Reply-Charging Funktionalität durch die bzgl. der Original-Nachricht empfangsseitige Netzwerkeinheit (Informationselement "Reply-Charging-Support-At-Recipient-MMSE").

17. Softwareprogramm, welches auf einer Vorrichtung mit einem Prozessor, insbesondere einer Netzwerkeinheit gemäß Anspruch 13, derart ablaufen kann, daß das Softwareprogramm mitsamt der Vorrichtung die Verfahrensschritte auf der Seite der Vorrichtung gemäß einem der Ansprüche 1 bis 12 ausführt.

18. Softwareprogramm, welches in eine Vorrichtung mit einem Prozessor, insbesondere einer Netzwerkeinheit gemäß Anspruch 13, ladbar ist, so daß die derart programmierte Vorrichtung einschließlich des Prozessors fähig oder angepaßt ist, die Verfahrensschritte gemäß einem der Ansprüche 1 bis 12 auszuführen.

## Claims

1. Method for transmitting a message, in particular a multimedia message, via a communications network from a transmitting application (mms User Agent A, mms Client A) to a receiving application (mms User Agent B, mms Client B) using an originator network unit (mms Relay/Server, mms Proxy-Relay) and a recipient network unit (mms Relay/Server, mms Proxy-Relay),
- the originator network unit and the recipient network unit being identical or different than one another and being situated in the domain of one or two service providers (mms Service Provider), and
- the message being used to request a reply charging functionality in the domain of at least one service provider,
**characterized**
**in that** information is transmitted with the message from the recipient network unit (mms Relay/Server, mms Proxy-Relay) regarding its support of the requested reply charging functionality to the receiving application (mms User Agent B, mms Client B).

2. Method according to Claim 1,
**characterized**
**in that** the message contains information regarding the readiness of the originator to accept the costs for the reply message from the recipient (Reply-Charging), the network unit or network units (mms Relay/Server, mms Proxy-Relay) transmitting or receiving the information regarding its/their support of the reply charging functionality (information element: "Reply-Charging-Support"; information element "Reply-Charging-Support-At-Originator-MMSE"; information element "Reply-Charging-Support-At-Recipient-MMSE") to or from at least one other unit (mms User Agent A, mms Client A; mms User Agent B, mms Client B; mms Relay Server A, mms Proxy-Relay A; mms Relay Server B, mms Proxy-Relay B) involved in the data interchange.

3. Method according to Claim 1 or 2,
**characterized**
**in that** the information regarding support of the requested functionality by the network unit (mms Relay Server A, mms Proxy-Relay A; mms Relay Server B, mms Proxy-Relay B) which is at the originator end in respect of the original message or the reply message is sent to or received and evaluated by the recipient network unit (mms Relay Server B, mms Proxy-Relay B; mms Relay Server A, mms Proxy-Relay A) (information elements "Reply-Charging-Support-At-Originator-MMSE").

4. Method according to one of the preceding claims,
**characterized**
**in that**, if the requested functionality is supported by the two network units (mms Relay/Server A, mms Proxy-Relay A; mms Relay/Server B, mms Proxy-Relay B) which are different than one another, corresponding information (information element "Reply-Charging-Support-At-Recipient-MMSE") is transmitted to or received from the receiving application (mms User Agent B, mms Client B; mms User Agent A, mms Client A).

5. Method according to one of the preceding claims,
**characterized**
**in that**, if the requested functionality is supported by both network units, the information regarding support of the requested functionality by the originator network unit (information element "Reply-Charging-Support-At-Originator-MMSE") is deleted by the recipient network unit and is not transmitted to the receiving application.

6. Method according to one of the preceding claims,
**characterized**
**in that** the information regarding support of the requested functionality is concomitantly transmitted to or received from the appropriate transmitting application in the message *MM1_submit.RES* or *M-Send.conf* in WAP, Wireless Application Protocol by the network unit which is at the originator end in respect of the original message or the reply message.

7. Method according to Claim 6,
**characterized**
**in that** a new header field ("Reply-Charging-Support-At-Originator-MMS-Proxy-Relay") with hexadecimal coding of the field name is used in the WAP message *M-Send.conf,* the field values of said field name preferably comprising the octet <octet 128> if the requested functionality is supported and comprising the Octet <octet 129> if it is not supported.

8. Method according to one of the preceding claims,
**characterized**
**in that** the information regarding support of the requested functionality is concomitantly transmitted to or received from the receiving application in the messages *MM1_notification.REQ* and *M-notification.ind* (in WAP) and/or *MM1_retrieve.RES* and *M-retrieve.conf* (in WAP) by the recipient network unit.

9. Method according to Claim 8,
**characterized**
**in that** a new header field ("Reply-Charging-Support-At-Recipient-MMS-Proxy-Relay") with hexadecimal coding of the field name is used in the WAP messages *M-notification.ind* and/or *M-retrieve.conf,* the field values of said field name preferably comprising the octet <Octet 128> if the requested functionality is supported and comprising the Octet <octet 129> if it is not supported.

10. Method according to one of the preceding claims,
**characterized**
**in that** the receiving application evaluates the presence or absence of the information regarding support of the requested functionality by the originator and/or recipient network unit and outputs or refrains from outputting corresponding information for the user.

11. Method according to one of the preceding claims,
**characterized**
**in that** for the reply charging functionality when transmitting a message, in particular a multimedia message, via a communications network from a transmitting application (mms User Agent A, mms Client A) to a receiving application (mms User Agent B, mms Client B) using an originator network unit (mms Relay/Server A, mms Proxy-Relay A) and a recipient network unit (mms Relay/Server B, mms Proxy-Relay B) which is different than the latter, the originator network unit and the recipient network unit being situated in the domain of two service providers (mms Service Provider), with the message containing information regarding the readiness of the originator to accept the costs for the reply message from the recipient (reply charging) at least one of the following information items is transmitted from the originator network unit to the recipient network unit or is received by the latter:
• the readiness of the originator to accept the costs for the reply message from the recipient (information element "Reply-Charging");
• a time limit for sending the free-of-charge reply message (information element "Reply-Charging-Deadline");
• the maximum size of the reply message (information element "Reply-Charging-Size");
• the message identification number (Message-ID) of the original message (information element "Reply-Charging-ID") when transmitting the reply message.

12. Method according to one of the preceding claims,
**characterized**
**in that**, if the originator and recipient network units are different than one another, at least one of said information items is concomitantly transmitted or received in the message *MM4_forward.REQ.*

13. Network unit (mms Relay/Server, mms Proxy-Relay) in the domain of a service provider (mms Service Provider), which network unit is associated with a transmitting application (mms User Agent A, mms Client A) and/or a receiving application (mms User Agent B, mms Client B), in particular a network unit in a UMTS network, in particular for carrying out method steps according to one of the preceding claims, the network unit being able to be used to transmit messages, in particular multimedia messages, from a transmitting application to a receiving application, with the message being used to request a reply charging functionality in the domain of a service provider,
**characterized**
**in that** the network unit is designed such that it is able to transmit information with the message regarding its support of the requested reply charging functionality to, or receive it from, the receiving application (mms User Agent B, mms Client B).

14. Network unit (mms Relay/Server, mms Proxy-Relay) according to Claim 13, in the domain of a service provider (mms Service Provider mms), the network unit being associated with a transmitting application (mms User Agent A, mms Client A) and/or a receiving application (mms User Agent B, mms Client B), in particular a network unit in a UMTS network, in particular for carrying out method steps according to one of Claims 1 to 12, the network unit being able to be used to transmit messages, in particular multimedia messages, from a transmitting application to a receiving application, a message containing information regarding the readiness of the originator to accept the costs for the reply message from the recipient (Reply-Charging),
**characterized**
**in that** the network unit is designed such that it can transmit or receive and evaluate at least one of the following information items:
• transmission to the receiving application: the readiness of the originator to accept the costs for a reply message from the recipient (information element "Reply-Charging") if the originator and recipient network units are different;
• transmission by the originator network unit to, or reception by, the recipient network unit if the originator and recipient network units are different: a time limit for sending a free-of-charge reply message (information element "Reply-Charging-Deadline");
• transmission to or reception by another unit (mms User Agent B, mms Client B; mms Relay Server A, mms Proxy-Relay A; mms Relay Server B, mms Proxy-Relay B) involved in the data interchange: the maximum size for a reply message (information element "Reply-Charging-Size");
• transmission to or reception by the network unit which is at the recipient end in respect of the reply message: the message identification number (Message-ID) of the original message (information element "Reply-Charging-ID") when transmitting the reply message.

15. Subscriber unit for communication in a communications network, in particular for carrying out method steps according to one of Claims 1 to 12, having at least one receiving application (mms User Agent A, mms Client A; mms User Agent B, mms Client B) for receiving messages, in particular multimedia messages, from a network unit (mms Relay/Server, mms Proxy-Relay) in the domain of a service provider (mms Service Provider), in particular a network unit according to Claim 13 or 14, the message containing a request for a reply charging functionality in the domain of a service provider,
**characterized**
**in that** the apparatus is designed such that it can receive and evaluate information inserted into the message regarding support of the requested reply charging functionality by the network unit involved.

16. Subscriber unit, in particular according to Claim 15, for communication in a communications network, in particular for carrying out method steps according to one of Claims 1 to 12, having a transmitting and/or receiving application (mms User Agent A, mms Client A; mms User Agent B, mms Client B) for transmitting and/or receiving messages, in particular multimedia messages, from a network unit (mms Relay/Server, mms Proxy-Relay) in the domain of a service provider (mms Service Provider), in particular a network unit according to Claim 13 or 14, the messages being able to contain information regarding the readiness of the originator to accept the costs for the reply message from the recipient (Reply-Charging),
**characterized**
**in that** the apparatus is designed such that it can transmit or receive at least one of the following information items:
• reception and evaluation of information regarding the readiness of the originator to accept the costs for a reply message from the recipient (information element "Reply-Charging") if the originator and recipient network units are different;
• transmission and/or reception of information regarding the maximum permissible size of the reply message (information element "Reply-Charging-Size");
• reception and evaluation of information regarding support of the reply charging functionality by the network unit which is at the originator end in respect of the original message or the reply message (information element "Reply-Charging-Support-At-Originator-MMSE");
• reception and evaluation of information regarding support of the reply charging functionality by the network unit which is at the recipient end in respect of the original message (information element "Reply-Charging-Support-At-Recipient-MMSE").

17. Software program which can run on an apparatus having a processor, in particular a network unit according to Claim 13, such that the software program and the apparatus together perform the method steps on the part of the apparatus according to one of Claims 1 to 12.

18. Software program which can be loaded into an apparatus having a processor, in particular a network unit according to Claim 13, so that the apparatus programmed in this way, including the processor, is able or has been adjusted to perform the method steps according to one of Claims 1 to 12.

## Revendications

1. Procédé de transmission d'un message, et plus particulièrement d'un message multimédia, sur un réseau de communication d'une application émettrice (MMS User Agent A, MMS Client A) à une application réceptrice (MMS User Agent B, MMS Client B) via une unité de réseau côté émetteur (MMS Relay/Server, MMS Proxy-Relay) et une unité de réseau côté récepteur (MMS Relay/Server, MMS Proxy-Relay),
• l'unité de réseau côté émetteur et l'unité de réseau côté récepteur étant identiques ou différentes l'une de l'autre et étant situées dans la zone de compétence d'un ou de deux fournisseurs de services (MMS Service Provider) et
• une fonctionnalité « Reply Charging » dans la zone de compétence d'au moins un fournisseur de services étant demandée au moyen du message,
**caractérisé en ce que**
avec le message, des informations sont transmises de l'unité de réseau côté récepteur (MMS Relay/Server, MMS Proxy-Relay), lesquelles informations concernent le support par celle-ci de la fonctionnalité « Reply Charging » demandée, à l'application réceptrice (MMS User Agent B, MMS Client B).

2. Procédé selon la revendication 1, **caractérisé en ce que** le message comprend des informations concernant la disponibilité de l'émetteur à prendre en charge les frais du message de réponse du récepteur (Reply Charging), les informations étant transmises de l'unité ou des unités de réseau (MMS Relay/Server, MMS Proxy-Relay), lesquelles informations concernent le support par celle(s)-ci de la fonctionnalité « Reply Charging » (élément d'information « Reply Charging Support » ; élément d'information « Reply Charging Support At Originator MMSE » ; élément d'information « Reply Charging Support At Recipient MMSE »), à au moins un autre appareil impliqué dans l'échange de données (MMS User Agent A, MMS Client A ; MMS User Agent B, MMS Client B ; MMS Relay Server A, MMS Proxy-Relay A ; MMS Relay Server B, MMS Proxy-Relay B) ou étant reçues de ce dernier.

3. Procédé selon la revendication 1 ou 2, **caractérisé en ce que** l'information concernant le support de la fonctionnalité demandée par l'unité de réseau côté émetteur relativement au message d'origine ou au message de réponse (MMS Relay Server A, MMS Proxy-Relay A ; MMS Relay Server B, MMS Proxy-Relay B) est envoyée à l'unité de réseau côté récepteur (MMS Relay Server B, MMS Proxy-Relay B ; MMS Relay Server A, MMS Proxy-Relay A) ou est reçue et évaluée par cette dernière (élément d'information « Reply Charging Support At Originator MMSE ».

4. Procédé selon l'une des revendications précédentes, **caractérisé en ce que**, si la fonctionnalité demandée est supportée par les deux unités de réseau différentes l'une de l'autre (MMS Relay/Server A, MMS Proxy-Relay A ; MMS Relay/Server B, MMS Proxy-Relay B), une information correspondante (élément d'information « Reply Charging Support At Recipient MMSE ») est transmise à l'application réceptrice (MMS User Agent B, MMS Client B ; MMS User Agent A, MMS Client A) ou est reçue de celle-ci.

5. Procédé selon l'une des revendications précédentes, **caractérisé en ce que**, si la fonctionnalité demandée est supportée par les deux unités de réseau, l'information concernant le support de la fonctionnalité demandée par l'unité de réseau côté émetteur (élément d'information « Reply Charging Support At Originator MMSE ») est effacée de l'unité de réseau côté récepteur et n'est pas transmise à l'application réceptrice.

6. Procédé selon l'une des revendications précédentes, **caractérisé en ce que** les informations concernant le support de la fonctionnalité demandée sont également transmises dans le message MM1_submit.RES resp. M-Send.conf (en mode WAP, Wireless Application Protocol) de l'unité de réseau côté émetteur relativement au message d'origine ou au message de réponse à l'application émettrice correspondante, ou sont reçues de celle-ci.

7. Procédé selon la revendication 6, **caractérisé en ce qu'**est utilisé, dans le message WAP M-Send.conf, un nouveau champ d'en-tête (« Reply Charging Support At Originator MMS Proxy Relay ») avec codage hexadécimal du nom du champ, dont les valeurs de champ comprennent préférentiellement l'octet < octet 128 > en cas de support de la fonctionnalité demandée et l'octet < octet 129 > en cas de non-support.

8. Procédé selon l'une des revendications précédentes, **caractérisé en ce que** les informations concernant le support de la fonctionnalité demandée sont également transmises dans les messages MM1_notification.REQ resp. M-notification.ind (en mode WAP) et/ou MM1_retrieve.RES resp. M-Retrieve.conf (en mode WAP) de l'unité de réseau côté récepteur à l'application réceptrice, ou sont reçues de celle-ci.

9. Procédé selon la revendication 8, **caractérisé en ce qu'**est utilisé, dans les messages WAP M_notification.ind et/ou M_retrieve.conf, un nouveau champ d'en-tête (« Reply Charging Support At Recipient MMS Proxy Relay ») avec codage hexadécimal du nom du champ, dont les valeurs de champ comprennent préférentiellement l'octet < octet 128 > en cas de support de la fonctionnalité demandée et l'octet < octet 129 > en cas de non-support.

10. Procédé selon l'une des revendications précédentes, **caractérisé en ce que** l'application réceptrice évalue la présence ou l'absence de l'information concernant le support de la fonctionnalité demandée par l'unité de réseau côté émetteur et/ou côté récepteur et fait produire en sortie ou omet une information correspondante pour l'opérateur.

11. Procédé selon l'une des revendications précédentes, **caractérisé en ce que**, pour la fonctionnalité « Reply Charging », lors de la transmission d'un message, et plus particulièrement d'un message multimédia, sur un réseau de communication d'une application émettrice (MMS User Agent A, MMS Client A) via une unité de réseau côté émetteur (MMS Relay/Server A, MMS Proxy-Relay A) et une unité de réseau côté récepteur différente de celle-ci (MMS Relay/Server B, MMS Proxy-Relay B) à une application réceptrice (MMS User Agent B, MMS Client B), l'unité de réseau côté émetteur et l'unité de réseau côté récepteur se trouvant dans la zone de compétence de deux fournisseurs de services (MMS Service Provider), le message comprenant des informations concernant la disponibilité de l'émetteur à prendre en charge les frais du message de réponse du récepteur (Reply Charging), au moins l'une des informations suivantes est transmise de l'unité de réseau côté émetteur à l'unité de réseau côté récepteur, ou est reçue de cette dernière :
• disponibilité de l'émetteur à prendre en charge les frais du message de réponse du récepteur (élément d'information « Reply Charging ») ;
• un délai pour l'envoi du message de réponse gratuit (élément d'information « Reply Charging Deadline ») ;
• la taille maximale du message de réponse (élément d'information « Reply Charging Size ») ;
• le numéro d'identification des messages (Message ID) du message d'origine (élément d'information « Reply Charging ID ») lors de la transmission du message de réponse.

12. Procédé selon l'une des revendications précédentes, **caractérisé en ce que**, étant donné des unités de réseau différentes l'une de l'autre côté émetteur et côté récepteur, au moins l'une desdites informations étant également transmise, ou étant reçue, dans le message MM4_forward.REQ.

13. Unité de réseau (MMS Relay/Server, MMS Proxy-Relay) dans la zone de compétence d'un fournisseur de services (MMS Service Provider), laquelle est associée à une application émettrice (MMS User Agent A, MMS Client A) et/ou à une application réceptrice (MMS User Agent B, MMS Client B), et plus particulièrement unité de réseau d'un réseau UMTS, notamment pour exécuter des étapes de procédé selon l'une des revendications précédentes, des messages, et plus particulièrement des messages multimédia, pouvant être transmis, via l'unité de réseau, d'une application émettrice à une application réceptrice, une fonctionnalité « Reply Charging » étant demandée, au moyen du message, dans la zone de compétence d'un fournisseur de services, **caractérisée en ce que** l'unité de réseau est réalisée de manière telle qu'elle peut transmettre, avec le message, des informations concernant son support de la fonctionnalité « Reply Charging » demandée à l'application réceptrice (MMS User Agent B, MMS Client B) ou peut les recevoir de cette dernière.

14. Unité de réseau (MMS Relay/Server, MMS Proxy-Relay) selon la revendication 13, dans la zone de compétence d'un fournisseur de services (MMS Service Provider), l'unité de réseau étant associée à une application émettrice (MMS User Agent A, MMS Client A) et/ou à une application réceptrice (MMS User Agent B, MMS Client B), et plus particulièrement unité de réseau d'un réseau UMTS, notamment pour exécuter des étapes de procédé selon l'une des revendications 1 à 12, des messages, et plus particulièrement des messages multimédia, pouvant être transmis via l'unité de réseau d'une application émettrice à une application réceptrice, un message comprenant des informations concernant la disponibilité de l'émetteur à prendre en charge les frais du message de réponse du récepteur (Reply Charging), **caractérisée en ce que** l'unité de réseau est réalisée de manière telle qu'elle peut transmettre resp. recevoir et évaluer au moins l'une des informations suivantes :
• transmission à l'application réceptrice : la disponibilité de l'émetteur à prendre en charge les frais d'un message de réponse du récepteur (élément d'information « Reply Charging ») dans le cas où les unités de réseau côté émetteur et côté récepteur sont différentes ;
• transmission par l'unité de réseau côté émetteur ou réception par l'unité de réseau côté récepteur dans le cas où les unités de réseau côté émetteur et côté récepteur sont différentes: un délai pour l'envoi d'un message de réponse gratuit (élément d'information « Reply Charging Deadline ») ;
• transmission ou réception par un autre appareil impliqué dans l'échange de données (MMS User Agent B, MMS Client B ; MMS Relay Server A, MMS Proxy-Relay A ; MMS Relay Server B, MMS Proxy-Relay B) : la taille maximale d'un message de réponse (élément d'information « Reply Charging Size ») ;
• transmission ou réception par l'unité de réseau côté récepteur relativement au message de réponse : le numéro d'indentification de message (Message ID) du message d'origine (élément d'information « Reply Charging ID ») lors de la transmission du message de réponse.

15. Appareil d'usager destiné à la communication dans un réseau de communication, et plus particulièrement pour exécuter des étapes de procédé selon l'une des revendications 1 à 12, avec au moins une application réceptrice (MMS User Agent A, MMS Client A, MMS User Agent B, MMS Client B) pour recevoir des messages, et plus particulièrement des messages multimédia, d'une unité de réseau (MMS Relay/Server, MMS Proxy-Relay) dans la zone de compétence d'un fournisseur de services (MMS Service Provider), et plus particulièrement une unité de réseau selon la revendication 13 ou 14, le message contenant une demande de fonctionnalité « Reply Charging » dans la zone de compétence d'un fournisseur de services, **caractérisé en ce que** le dispositif est réalisé de manière telle qu'il peut recevoir et évaluer des informations insérées dans le message et concernant le support, par l'unité de réseau impliquée, de la fonctionnalité « Reply Charging » demandée.

16. Appareil d'usager, en particulier selon la revendication 15, destiné à la communication dans un réseau de communication, et plus particulièrement pour exécuter des étapes de procédé selon l'une des revendications 1 à 12, avec une application émettrice et/ou réceptrice (MMS User Agent A, MMS Client A ; MMS User Agent B, MMS Client B) pour émettre et/ou recevoir des messages, et plus particulièrement des messages multimédia, d'une unité de réseau (MMS Relay/Server, MMS Proxy-Relay) dans la zone de compétence d'un fournisseur de services (MMS Service Provider), et plus particulièrement une unité de réseau selon la revendication 13 ou 14, les messages pouvant contenir des informations concernant la disponibilité de l'émetteur à prendre en charge les frais du message de réponse du récepteur (Reply Charging), **caractérisé en ce que** le dispositif est réalisé de manière telle qu'il peut transmettre resp. recevoir au moins l'une des informations suivantes :
• réception et évaluation d'informations concernant la disponibilité de l'émetteur à prendre en charge les frais d'un message de réponse du récepteur (élément d'information « Reply Charging ») dans le cas où l'unité de réseau émettrice et l'unité de réseau réceptrice sont différentes ;
• transmission et/ou réception d'informations sur la taille maximale autorisée du message de réponse (élément d'information « Reply Charging Size ») ;
• réception et évaluation d'informations concernant le support de la fonctionnalité « Reply Charging » par l'unité de réseau côté émetteur relativement au message d'origine ou au message de réponse (élément d'information « Reply Charging Support At Originator MMSE ») ;
• réception et évaluation d'informations concernant le support de la fonctionnalité « Reply Charging » par l'unité de réseau côté récepteur relativement au message d'origine (élément d'information « Reply Charging Support At Recipient MMSE »)

17. Programme logiciel qui peut tourner sur un dispositif avec un processeur, et plus particulièrement une unité de réseau selon la revendication 13, de manière telle que le programme logiciel, avec le dispositif, exécute les étapes de procédé du côté du dispositif selon l'une des revendications 1 à 12.

18. Programme logiciel qui peut être chargé dans un dispositif avec un processeur, et plus particulièrement une unité de réseau selon la revendication 13, de manière telle que le dispositif ainsi programmé, y compris le processeur, est capable ou adapté pour exécuter les étapes de procédé selon l'une des revendications 1 à 12.
